# EUROPEAN PATENT APPLICATION

(11) **EP 2 876 907 A1**
(43) Date of publication of application: **27.05.2015**
(21) Application number: 14193936.3
(22) Date of filing: 19.11.2014
(51) Int. Cl.: H04W 4/00, G06F 1/16

(54) **Device control using a wearable device**

(30) Priority: 25.11.2013 US 201314089382
(71) Applicant: InvenSense, Inc., San Jose, CA 95110 (US)
(72) Inventor: Katingari, Karthik, San Jose, CA 95110 (US); Heshmati, Ardalan, San Jose, CA 95110 (US)
(74) Representative: Smith, Jeremy Robert

(57) **Abstract**

A system and method are directed to controlling multiple devices using a common control unit for an established context. More particularly, the system and method are directed to controlling multiple devices using a common control unit such as a wearable device which controls activities for an established context. The control unit may control multiple devices where for a particular situation or context, a controlling activity, such as gesturing, enables the control unit to control and communicatively connect with the devices.

## Description

### FIELD OF THE INVENTION

This application relates generally to devices and communication across a network; more particularly, this application related to controlling multiple devices using a common control unit by way of a controlling activity for an established context.

### BACKGROUND

Wearable computing devices are utilized in a variety of environments. It is desirable that these wearable computing devices be utilized to effectively control other remote devices for various functions. Therefore, what is desired in an approach that will enable a user to control one or more remote devices, through an efficient and effective system and process. The system and process should be easy to implement, cost effective and adaptable to existing environments. The present invention addresses such a need.

### SUMMARY

According to the invention, in one or more embodiments, a method comprising utilizing smart media to establish a context for a wearable device, and utilizing the context established for wearable device to control one or more remote devices, is provided.

In accordance with one or more embodiments of the present invention, a system comprising: smart media, a wearable device and one or more remote devices is provided for. The smart media of the system is for communicating with and establishing a context for a wearable device. The wearable device is for associating one or more commands to control one or more remote devices. The one or more remote devices respond to the one or more commands from the wearable device in relation to each of the one or more remote devices.

In accordance with another embodiment of the present invention, a method comprising utilizing smart media to establish a context for a wearable device, and utilizing the context established for wearable device to control one or more remote devices, is provided for.

In accordance with another embodiment of the present invention, a non-transitory computer-readable medium having stored thereon data representing sequences of instructions that, when executed by a processor, cause the processor to perform operations comprising: establishing a context for a wearable device using smart media and utilizing the context established for wearable device to provide control of one or more remote devices.

A further understanding of the nature and the advantages of particular embodiments disclosed herein may be realized by reference of the remaining portions of the specification and the attached drawings.

The above and/or other aspects, features and/or advantages of various embodiments will be further appreciated in view of the following description in conjunction with the accompanying figures. Various embodiments can include and/or exclude different aspects, features and/or advantages where applicable. In addition, various embodiments can combine one or more aspect or feature of other embodiments where applicable. The descriptions of aspects, features and/or advantages of particular embodiments should not be construed as limiting other embodiments or the claims.

### BRIEF DESCRIPTION OF THE DRAWINGS

FIG. 1 sets forth a block diagram of an illustrative exemplar of the present invention in which multiple devices are controlled through smart media which is controlled by a wearable computing device.
FIG. 2 sets forth a block diagram of the method of an illustrative exemplar of the present invention in which a context is established, the wearable device is configured and the remote devices are controlled, in accordance with one or more embodiments.
FIG. 3 sets forth a block diagram of the invention in which a wearable device controls one or more Device To be Controlled (DTC)s in relation to a defined context.
FIG. 4 sets forth examples of wearable devices and remote devices arranged in relation to a system of the present invention, in accordance with one or more embodiments.
FIG. 5 sets forth an example of a Motion Processing Unit (MPU) of the present invention

### DETAILED DESCRIPTION

The application relates to controlling multiple devices using a common control unit by way of gesture for an established context. More particularly, this application is related to controlling multiple devices using a common control unit by way of a controlling activity for an established context. Illustratively, over a communication network, one control unit may control multiple devices having sensing capabilities where for a particular situation or context, a controlling activity, such as gesturing, enables the control unit to control and communicatively connect with the devices.

The following description is presented to enable one of ordinary skill in the art to make and use the invention and is provided in the context of a patent application and its requirements. Various modifications to the preferred embodiments and the generic principles and features described herein will be readily apparent to those skilled in the art. Thus, the application and present invention are not intended to be limited to the embodiments shown, but are to be accorded the widest scope consistent with the principles and features described herein.

Personal computers, wearable computers, laptop computers, tablet computers, cellular phones, and countless other types of Internet-capable devices are rising in use, often where users are dependent on multiple devices to obtain information. The devices are becoming ubiquitous, their intelligence in increasing, and the management of multiple devices by a single user often proves a challenge at times. Trends are indicating that many of these devices are beginning to include sensors, detectors, cameras, multiple connectivity options, image and audio processors, etc. Trends are further indicating that many of these devices are becoming wearable, developing a new computing device area being referred to as "wearable computing."

In some wearable computer devices, the device may incorporate a wearable display proximate to the user's eye for nearly full-fielded viewing by the eye of imagery and data imaged (i.e., computer glasses). In other wearable computer devices, sensors are strategically integrated so as to optimally obtain data from sensors, to receive sensed input, and in other instances to be in line-of-sight for improved sensed readings. A smart phone is considered a wearable computer device by some due to the intelligence, computing capabilities and sensing capabilities provided. Still, others associate a smart phone with as being a device that is less than a wearable computer. These types of device are typically convenient for connectivity and communication in part due to their complex processing and power capabilities

In other wearable computer type devices, also of which may be referred to as body-borne computers, miniature electronic devices may also be incorporated or integrated with the device; for instance an electronic device may be situated on, below or within the clothing of the user. In general, wearable computer devices provide for an interaction between the computer of the wearable computer and the user in which the interaction can be continuous, autonomous, predetermined, or concurrent with other devices.

Similarly, devices and wearable devices in general that are capable of communicating over the internet or other communication venue are also on the rise. Some of these devices may include processing power similar to that of a computer, while others may be more non-computer styled devices typically not including the processing applications and power associated with a traditional computing device.

Certain of these devices may often include any of the sensors, detectors, cameras, multiple connectivity options, etc. associated with that which may collect, gather, measure, record or otherwise obtain data in relation to what the device is proximate to or oriented to detect. Often these devices, also referred to herein as "sensing devices," may have an actuator or program that enables them to act in response to a command or interaction with a user interface of the device. Some sensing devices may be simple in design having a single sensor, communication logic and transmitter to transmit collected data to a receiving destination, while others may be more complex including computer-based processing capabilities, power and communication.

For instance a sensing device that measures the heart rate of a runner may have an on/off switch that can be controlled by a user's hand mechanically on the device, or via a software command requiring a user to interact with the device through a touch screen or remote connection. For instance a sensing device that measures the heart rate of a runner could trigger control the speed of the treadmill. Heart rate is the control command and control activity is the speed of the treadmill. Another example of a sensing device is a smart phone that determines the location of the user through GPS sensing. A further example is a toy truck which requires a user's input from the toy truck's remote control to sense what action to undertake in response to the remote's transmitted signal. Still another example is that of a set of sensing devices comprising a central alarm system which includes an alarm panel that contains a processor and receiver for determining whether the varied wired and wireless alarm sensors indicate an active alarm situation at each of their respective locations.

Accordingly, trends are further indicating that many of these devices are becoming more common as users wish to gather and collect data from a variety of sources be it personal (e.g., pulse, geopositional location (GPS), temperature, etc.), business (e.g., test data, product utilization information, use data, etc.), educational (e.g., research information, sensed data, etc.), etc. Similarly, individuals now find that there are often multiple devices that are sensing information around them which is of interest to them, but for which each sensing device requires a user to interact directly and often individually with the sensing device. Unfortunately, these types of devices often lack computing power and have limited communication or connectivity capabilities.

For instance, at a residence, a user may all in matter of a few minutes wish to check on an alarm status, learn the temperature outside, turn down the television volume, and check their email. Each of these activities requires the user to access and interact directly with the source of the data. Often, two or more of these activities may be of interest to the user concurrently, but the user is limited in his ability to act. Similarly, how the user interacts to obtain the information from each of the data sources may also be affected by the situation a user may find him in.

By example, in a context a user may routinely wish to answer a phone call while turning down the television volume and turning on the closed-captioning of the show, just before answering the phone. However, in another context, where the television show being watched is the primary subject of interest, the user may wish to answer the phone and increase the television volume concurrently, with or without closed-captioning, for an active discussion with the other party about the television show of mutual interest. Still in a further context, where both the phone call and the television show are important but independent of concurrent interaction by the user, the user may wish to answer the phone, turn off the television image and sound, and start recording the television for future viewing and turn off the lighting in the television room. Unfortunately, in each of these contexts, the user must interact specifically and individually with each device, often using the device-specific interaction and/or communication protocol.

The interaction between a user and a computer device, non-computer device and/or sensing device, presents challenges in both the management of a user's activity and in controlling the device for the situation. It is foreseeable that such challenges will be increasing with the prolific use of such devices.

For example, users of a wearable computing device displaying an image to a user through a glasses-styled device for instance, will desire to interact with the displayed image and gather information regarding the image displayed, irrespective of whether the image is real or virtual. In order to gather that information, users viewing through the glasses will want to interact with data sources that can provide additional information about the viewed image and would be desirous to maintain their connectivity with the image. Similarly, interactions between a user and a user's asset that is equipped with sensors or other data collection capability will also create a desire by the user to interact with the asset and gather information regarding the asset to better understand its condition, status, and/or other details about the asset. Unfortunately, in order to obtain such information, often a user is required to disassociate from the primary topic of interest to find connectivity, locate a data source and/or interact with another device.

Still, in other situations, a user may find that there is only one way to interact with a device or a grouping of devices, such as an alarm system. Often the central panel of an alarm system is located in one room or a hidden area of home, typically away from where a user may typically spend most of their time. In those situations where the alarm may be controlled by the user's smart phone, the user is still required to interrupt the present activity he may be engaged with on the smart phone to interact with the alarm system, or the user is required to also continuously have the smart phone proximate to him to allow for the interaction. Each of these situations is inconvenient to a user and again typically requires a user to disassociate from the primary topic of interest to find connectivity, locate a data source and/or interact with another device.

As will be appreciated, as the number of sensors, devices and availability of accessible and collected data proliferates, the need to better control access to data collected from all sources as desired and when desired by the user will increase as will the complexity of interaction of the user with such sources and devices. Further the desire by the user to be able to access and control such devices without the need to specifically and uniquely interact with each device will also be desired.

Therefore, often users must carry out complex and/or burdensome input procedures to perform desired computing functions and delivery of collected or sensed information causing a traditional approach to lack an intuitive approach, as well as be inconvenient and inefficient. Further, a user may often be required to interrupt a phone call or other activity on a smart phone to interact with a device uniquely. Additionally, a user may also often be required to have his smart phone proximate to him at all times which is inconvenient.

Therefore, what is desired in an approach that will enable a user to control one or more remote devices, even if each device relies on different communication methods, using a user-interactive device that can control the remote devices through smart media. Additionally, what is also desired in an approach that will enable a user, in relation to a particular situation predetermined by the user, to control one or more remote devices in relation to the predetermined situation, even if each device relies on different communication methods, using a user-interactive device that can control one or more of the remote devices through one or more gestures associated with controlling the affected device, through a smart, convenient intermediary smart media.

As used herein, the term "wearable device" is intended to include computer devices, non-computer devices and sensing devices that are i) capable of having an interaction with a user through a user interface (UI) associated with the device, and ii) are wearable by a user or may be carried, held or are otherwise transportable by a user. Typically, it is envisioned that a wearable device though having limited computer-based functionality as compared to a traditional personal computer for instance, will have additional utility in combination with the invention. Examples of a wearable device may include but not be limited to devices described herein that may take the form of pedometers, chest straps, wrist bands, head bands, arm bands, hats, glasses, watches, sneakers, clothing, pads, etc. In many implementations, a wearable device will be capable of converting a user's input of a gesture or movement into a command signal.

As used herein, the term smart media is intended to include computer-based devices, having sufficient communications capability, processing and power to transmit, and receive data, commands and information and communicate with multiple devices using one or more communication methods (i.e., WIFI, MIFI, 3G, 4G, Bluetooth, Bluetooth Low-Energy [BLE], and other communication protocols). A smart media may include any computer-based device as described above including but not limited to smart phones, MIFI devices, computers, wearable computing devices, computing routers, computer-based network switches, and the like. It is to be appreciated that the smart media may be any computer such as a personal computer, microcomputer, workstation, hand-held device, smart media, smart router, smart phone, or the like, capable of communication over a communication method. It is envisioned that smart media will also include a UI which will enable a user of the invention to more readily connect and configure all associated devices of the system.

As used herein, the term "remote device" is intended to include any include computer devices, non-computer devices and sensing devices that are i) capable of acquiring data in relation to a predetermined activity or performing a predetermined activity in relation to a received command, and ii) capable of communication at least uni-directionally, and preferably bi-directionally, over a communication link, with smart media across a common communication method (i.e., WIFI, MIFI, 3G, 4G, Bluetooth, Bluetooth Low-Energy [BLE], and other communication protocols). Typically, it is envisioned that a remote device though having limited, if any, computer-based functionality as compared to a traditional personal computer for instance, will have additional utility in combination with the invention. Examples of a remote device may include but not be limited to devices described herein that may take the form of certain wearable devices described above as well as televisions, garage doors, home alarms, gaming devices, toys, lights, gyroscope, pressure sensor, actuator-based devices, measurement-based devices, etc. The use of the descriptor "remote" does not require that the device be physically separate from a smart media or wearable device, rather that the control logic of the remote device is specific to the remote device. A remote device may or may not have a UI.

For purposes of this application, the terms "code", "program", "application", "software code", "software module", "module", and "software program" are used interchangeably to mean software instructions that are executable by a processor.

An illustrative method includes a wearable device, associated with a user, being in communication with smart media that is to configure the wearable device for use by a user. The smart media configures the wearable device such that actions or gestures on the wearable device are understood as commands associated to be associated with one or more remote devices. The remote devices are in established communication with the smart media using one or more communication methods. The smart media receives the commands from the wearable device and transmits the commands to the one or more remote devices for action by the one or more remote devices. Gestures provided by the user via the wearable are dependent on the wearable device, where, for instance, if the wearable device is a wrist-band styled device, taps or swooshes, etc., on the device are indicative of gesture activity; where the wearable device is a glasses-styled device, blinks, winks or eye rolls on the device may be examples of indications of gesture activity.

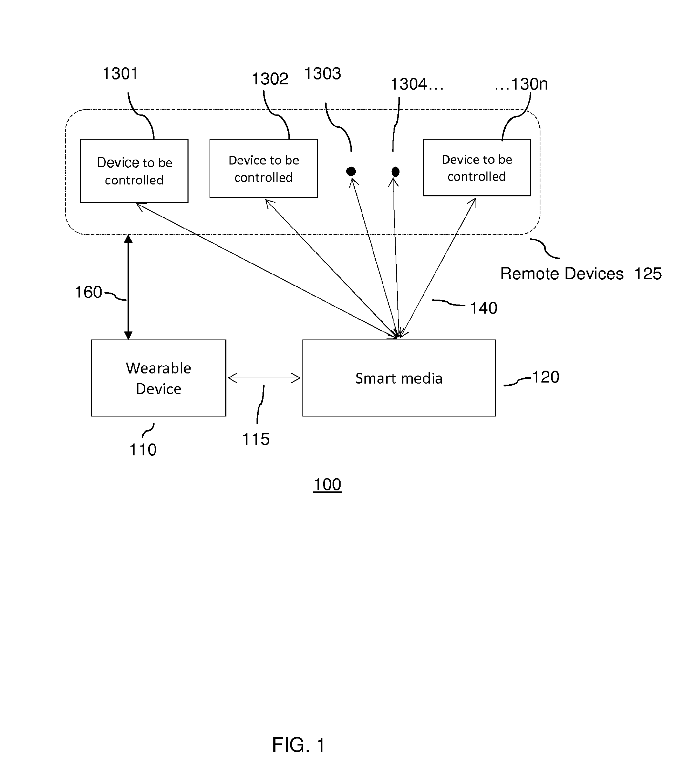

FIG. 1 sets forth a block diagram 100 of an illustrative exemplar of the present invention in which multiple devices are controlled through smart media 120 which is controlled by a wearable computing device.

From FIG. 1, the wearable computing device 110 is the control unit which is capable of communication with smart media 120. The smart media 120 is preferably a smart phone or other computer-based device (e.g., PC, tablet PC, PC glasses, wearable device that is computer-based, etc.) that is capable of communication and connectivity with the wearable computing device 110. The smart media 120 configures the wearable device to determine the various commands and interactions the user may undertake with the wearable device across communications link 115. The communications link between the smart media 120 and the wearable device is any communication such as those of the previously discussed communication methods which are preferred, including WIFI, MIFI, 3G, 4G, Bluetooth, Bluetooth Low-Energy [BLE], and other communication protocols. The smart media 120 then may receive various commands from the user across communications link 115, via the wearable device, intended to be communicated from the wearable device to one or more remote devices 125 which comprise devices 1301 - 130n.

The wearable device when in communication and connected with the smart media 120 then establishes a context to the remote device(s) to be controlled for the context across communication links 140. This establishing a context step is accomplished by the smart media 120 establishing the required "hand shake" with the one or more remote devices 125 to be controlled and the smart media 120 then relays the established control. It will be appreciated that not all remote devices 125 are required to be controlled in any particular context, rather a context will determine which remote devices are to be included for controlling and in what manner commands, gestures, communications, order, etc., will be undertaken for such control of the affected remote devices based on the preferences of the specific context.

In a preferred embodiment, a plurality of devices (130a-130x) are suitable for concurrent connection across pathways 140 with the smart media 120. In a further preferred embodiment the smart media 120 is able to establish a communication link with remote devices and communicate a command to one or more remote devices indicating that each specified remote device is to communicate and receive commands directly from the wearable device, across link 160.

Preferably, the wearable device includes a control mechanism having a controller for identifying a motion or gesture by a user to activate the control of a Device To be Controlled (DTC) by the wearable device. For instance, a control mechanism in one or more embodiment includes a control unit to identify motion of user, where the motion may be physical, movement-based, detectable or otherwise perceptible by the wearable device. In another embodiment, the control unit is configured to identify gestures such as a tap, twist turn, touch or other gesture movement by the user or of the device (i.e., movement of the device resulting from the movement by the user with the device). In a further embodiment, the control unit is configured to identify blinks, winks, flickers and other eye movements by the user of the device as the device is linked to be operative with the eye movements of the user (i.e., glasses).

In one or more preferred embodiments, a smart phone having a plurality of communication methods suitable for communication with the one or more remote devices is the smart media 120. The smart phone further having a processor, display and UI suitable for interaction with the user having the wearable device and its communication method. The remote devices are not required to be as complex or as sophisticated as the smart media 120.

As such, it will be appreciated that the present invention provides for three device types which are not required to have common levels of operation or sophistication. Similarly, each remote device is not required to be identical, have or require the same communication method, or perform the same or similar action.

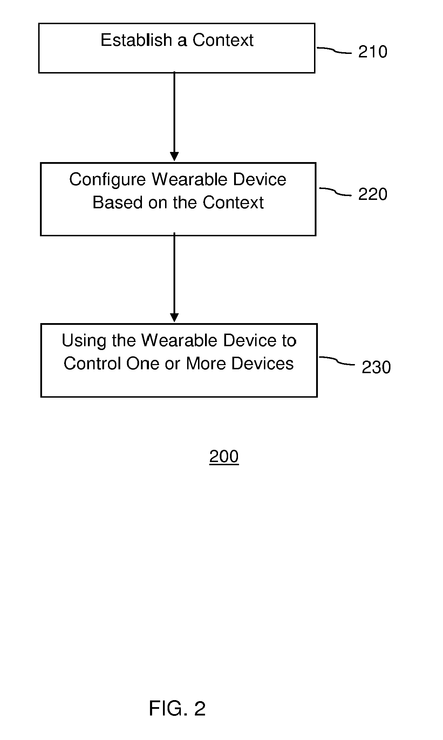

FIG. 2 sets forth a block diagram of the method 200 of an illustrative exemplar of the present invention in which a context is established 210, the wearable device is configured 220 and the remote devices are controlled 230, in accordance with one or more embodiments.

From FIG. 2, a method for controlling multiple devices through smart media which is controlled by a wearable device is provided. The method depicted is, in one embodiment, for utilizing smart media to establish a context for a wearable device; and utilizing the context established wearable device to control one or more devices. At 210 a context is established from the smart media to the one or more remote devices. In establishing the context, it is understood that the context of the device is based upon the environment or situation. For instance, in a residential home situation, context may include a communication method of a WIFI, whereas in a different context but still in a residential environment, the context may be an alarm situation where only those alarm-related remote devices are activated by a user through specific gestures associated with the wearable device in relation to the defined context.

At 220, the wearable device is configured based on the context. At 230, the user using the wearable device is able to control one or more of the remote devices, in relation to the context of 220 as configured, based on gestures and movements by the user using the wearable device. In a preferred embodiment, gestures may comprise any of a touch, button, tap, signature, audio, command operation, image, bio signal, heart rate monitor, and movement, etc. Further, a gesture detector associated with the wearable device is also preferred in which a touch sensor is utilized to detect contact of a user with the touch sensor. Further, the gesture detector further may also comprise an accelerometer to detect acceleration of the system and a gyroscope to detect rotation of the system, the accelerometer and gyroscope to generate motion data.

In another embodiment, a wearable device is used to one or more remote devices via an intermediary computer such as a smart phone. In such an embodiment, the wearable device is connected and exchanging information with the smart phone using Bluetooth Low Energy (BLE) communication. The smart phone and a remote DTC are used to control a further remote device that is connected via WIFI. Preferentially, an application or other service generates a UI for a user to configure the functionality of wearable device and the control function for control functionality for each remote device or DTC based on the context or independently of the context.

In a further preferred embodiment, once the wearable device is configured with the smart media, a hand-off control from the smart media is provided to the wearable device which is stored on the wearable device control logic. The hand-off, or control function, enables the wearable device to have direct control over the associated remote devices. Preferably, the control function is integrated within the wearable device and is capable of triggering or actuating at least one of the one or more remote devices. For instance, the control function may include any of a touch, button, tap, signature, audio, command operation, image, bio signal, heart rate monitor, and movement.

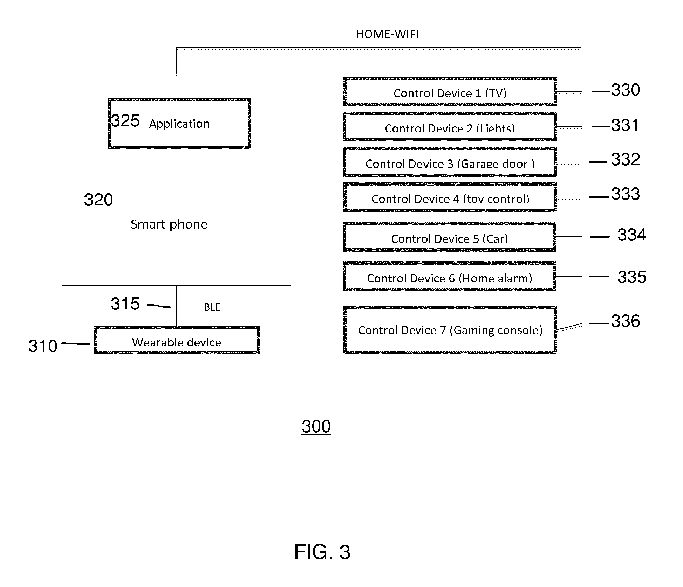

FIG. 3 sets forth a block diagram of the invention 300 in which a wearable device controls one or more DTCs (330-336) in relation to a defined context. For instance, from FIG. 3, a wearable device, such as a wrist pad 310, is in communication with a computer-based intermediary device having an application program 320. In one embodiment the smart media is a smart phone. In another embodiment the smart media is a computer with communication connectivity. The application 325 of the smart phone 320 is connected and exchanging information with the smart phone using BLE communication 315. The smart phone and a wearable device are used to control a remote device that is connected via WIFI 325, the context for the situation. Preferentially, an application or other service generates a UI for a user to configure the functionality of wearable device and the control function for control functionality for each remote device (330-336) based on the context or independently of the context. In a preferred embodiment, the gaming console 336 is desired to be controlled by the user.

The context set for one embodiment is that of gaming using WIFI. The control gesture on the wearable device 310 could then be associated to control only the gaming device where other devices (330-335) are not activated in relation to the commands or to the context.

In another preferred embodiment, all remote devices are activated and able to receive commands from the wearable device, but gestures from the wearable device only activate certain remote devices in relation to the gesture provided. For instance, where the context is "secure gaming", gestures may activate and command both the gaming console 336 and the home alarm 335. In such a scenario, different gestures may trigger different commands to different remote devices. For instance an "O" movement on the wearable device may turn on the game console 336 but be ineffective to generate a command of interest to the home alarm 335. Similarly, "A" movement on the wearable device may turn on the home alarm 335, but be ineffective to generate a command of interest to the game console 336.

In another preferred embodiment, the same gestures may activate different aspects of each of the active remote devices, so again in a "secure gaming" context, an "X" cross striking on the wearable device may turn off the gaming console 336 and issue an alarm from the home alarm 335 simultaneously. Wherein in the same context, it is still possible to configure aspects such that an "O" movement on the wearable device may turn on the game console 336 but be ineffective to generate a command of interest to the home alarm 335.

It will be appreciated that combinations and scenarios that the present invention are capable of is not limited.

Similarly, in other embodiments, it is possible that in many contexts most of the gestures could be further adapted for controlling further devices. For instance, the wearable device 310 could use communication medium like Bluetooth Low Energy (BLE) to communicate with smart phone 320 while smart phone 320 could connect to the end device using WIFI, WIFI-direct, GSM, CDMA or other wireless or wired medium (i.e., communication methods) giving access to a much broader range of devices to be controlled. For example, smart phone 320 could also relay control to a further device or if it incorporated the appropriate application, could elect to establish the control directly of the DTC. In such a scenario, the smart phone could establish a context such that the wearable gesture could define the DTC number and functionality. For example, a tap could mean control DTC-1 and do a pre-defined function while a twist could use to control DTC-2 and do a pre-defined function, etc.

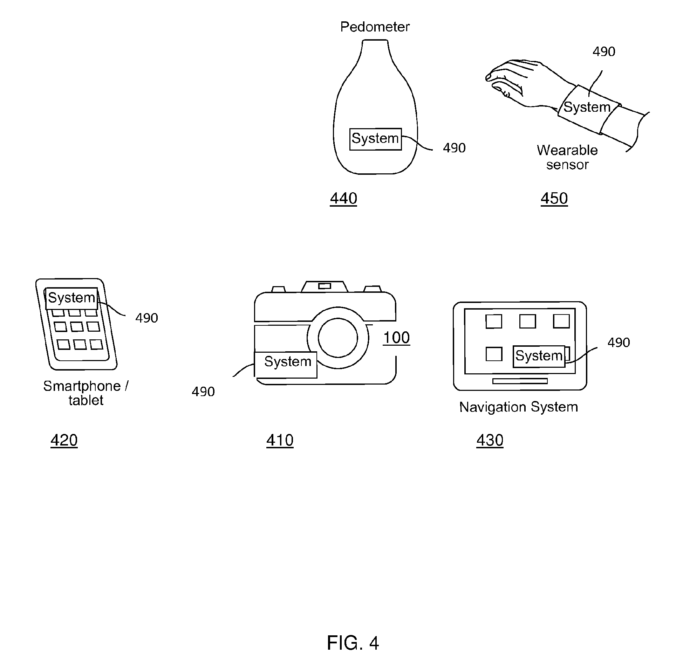

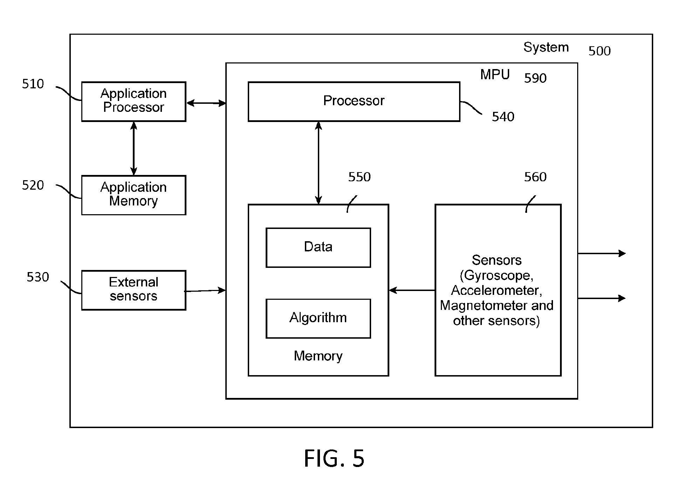

FIG. 4 sets forth examples of wearable devices and remote devices arranged in relation to a system of the present invention, in accordance with one or more embodiments. From FIG. 4, smartphone/tablet 420 having an integrated system 490 is shown. A camera 410 utilized as a remote device in communication with a system 490 is also shown. A navigation system 430 having an integrated system 490, where the navigation is capable of communication and is positioned as smart media, is also shown. A wearable device of a wrist sensing device 450 having an integrated system 490 is shown. A pedometer 440 as a remote sensing device 440 with an integrated system 490 is also shown. It will be appreciated that these and other embodiments of the present invention are readily understood as a result of the present application where the system of FIG. 5 may be incorporated into the exemplars of FIG. 4.

In a preferred embodiment, the system of the present invention may include a motion tracking device also referred to as Motion Processing Unit (MPU).

FIG. 5 sets forth an example of a MPU of the present invention. The system 500 is shown to include a MPU 590, an application processor 510, an application memory 520, and external sensors 530. In an embodiment, MPU 590 includes processor 540, memory 550, and sensors 560. The memory is shown to store algorithm, raw data and/or processed sensor data from the sensors and/or the external sensors. In an embodiment, sensors include accelerometer, gyroscope, magnetometer, pressure sensor, microphone and other sensors. External sensors may include accelerometer, gyroscope, magnetometer, pressure sensor, microphone, proximity, haptic sensor, and ambient light sensor among others sensors.

In some embodiments, processor, memory and sensors are formed on different chips and in other embodiments processor, memory and sensors reside on the same chip. In yet other embodiments, a sensor fusion algorithm that is employed in calculating the orientation is performed externally to the processor and MPU. In still other embodiments, the sensor fusion and confidence interval is determined by MPU.

In an embodiment, the processor executes code, according to the algorithm in the memory, to process the data in the memory. In another embodiment, the application processor sends to or retrieves from application memory and is coupled to the processor. The processor executes the algorithm in the memory in accordance with the application in the processor. Examples of applications are as follows: a navigation system, compass accuracy, remote control, 3-dimensional camera, industrial automation, or any other motion tracking application. In the case of the 3-dimensional application, a bias error or sensitivity error is estimated, by the processor. It is understood that this is not an exhaustive list of applications and that others are contemplated.

### EXAMPLE IMPLEMENTATIONS

### MULTIPLE DEVICE CONTROL BASED ON CONTROL FUNCTION

In one or more preferred embodiments, referencing FIG. 3, a smart phone 330 is arranged to configure the wearable device 310 for double tap, single tap + roll functionality. The smart phone additionally configures the Lighting 331 in a TV 330 room to "Turn -on or off" based on double tap and configures a TV's volume to go higher or lower based on single tap+ roll functionality of the wearable device 310. In this embodiment, the wearable device 310 can control two devices but different control functions define the device 310. The smart phone 320 after the initial setup could then be located anywhere in the house giving access to the person controlling devices better flexibility as the wearable device 310 is then used in proximity to the user.

### CONTEXT BASED DEVICE CONTROL

In one or more preferred embodiments, referencing FIG. 3, a smart phone 320 determines that the person is coming from work to home (with the assistance of GPS information) and once the user is near the garage door the smart phone configures the wearable device for double TAP, where such a gesture enable the opening of the garage door via control device 332. In this embodiment, the smart phone 320 is not required to be proximate to the person driving and gives better user experience handling regarding the garage door. Further this approach also presents for better security. In operation, the smart phone 320 provides the intelligence making the context for getting connected and enabling the functionality. The functionality could also be pre-defined by the user to include double tap, single tap, button press or touch, etc.

In one or more preferred embodiments, referencing FIG. 3, a similar context could be established based on proximity. For instance where a person is close to a car, the closeness to the car defines the context. A wearable band which includes a control device 334 may act then as a key to unlock the car via the smart phone 320 of the user. This embodiment provides additional advantage to the user as the phone / key fob combination often is not be easily reachable for unlocking the car and the presence of a wearable device 310 provides for enabling a user to make a simple gesture to unlock the same with context of proximity.

In another embodiment, the wearable device includes a display, example a watch. In another embodiment, the input to the wearable device can be a message. A command from the wearable device can further control the DTC. The message could include the command to be executed or the command could be predefined.

For example, a message to the wearable informing that the iron is on requires a command from the wearable to turn off the iron.

### USER SELECTS THE DEVICE TO BE CONTROLLED

In one or more preferred embodiments, referencing FIG. 3, a user selects the device to be controlled via smart phone 320 one for one. In such an embodiment, the user configures the application to control the device. For example, a user could chose to control the control device 333 such as Toy car and use the wearable device's pitch, roll, yaw functionality to move the car straight, back, left/right. Similarly one could chose to connect to other devices and use the same functionality to use in a different way. In such an embodiment, the user experience is better and more natural to control the device this way rather than touch UI from the smart phone.

### ESTABLISHING A DIRECT CONNECTION

In one or more preferred embodiments, a user's smart phone is configured with the wearable device 310 and control device 336, for instance. In the event that both the wearable device 310 and control device 336 both have the same communication method and can communicate directly, a direct communication and control functionality providing for a direct connection can be established by the present invention.

In other aspects, the present invention can be implemented in varying contexts and situations. For instance, in a preferred embodiment, a location defined the context for the operation of the invention. In such a situation, the implementation could be based on GPS or the way in which the system is connected (such as with localized WIFI or via another connection method) where all the devices to be controlled are connected similarly, irrespective of the WIFI source, etc.

Still, in other aspects, an implementation could be based on the state of the device to be controlled as defining the context. For example, in an implementation involving a television having a browser page open, a context to enable "air-mouse" type functionality on the wearable device could be established. In such an implementation, the state could simply be the device being turned ON or OFF (e.g., toy car).

Still, in other aspects, an implementation could be based on time as defining the context. For example, in an implementation involving a determination as to whether it is day or night to enable a light on/off functionality.

Further, in other aspects, an implementation could be based on proximity as defining the context. For example, an implementation involving proximity to a device could be used as context.

Additionally, in other aspects, an implementation could be based on a picture of the device to be controlled as defining the context. For example, in an implementation of such a picture of the device could be a used as a context such as in the situation where the wearable device takes the form of computer-based glasses for instance.

Still, in other aspects, an implementation could be based on a device being turned ON or OFF as defining the context. For example, in an implementation involving a device turning ON, such could further be associated with a proximity to the device (as in the case of a toy remote car being ON for example).

Still, in other aspects, an implementation could be based on a device being activated by another independent act as defining the context. For example, in an implementation involving a phone ringing, as such is triggered by a calling in to a line from the act of another, such could further be associated with lowering volumes or turning off those associated remote devices that are active at the time of the phone ringing.

Further, in other aspects, an implementation could be based on being able to access a device's actuation as defining the context. For example, in an implementation involving a garage door, even in the event where a car within the garage is being stolen, the thief is unable to open the garage door absent having control over a wearable device which enables the door to open or close.

Further, in other aspects, an implementation could be based on a user's situation as defining the context. For example, in an implementation involving a user sleeping, under such a context, the invention could establish Turn-off/Turn-on features on one or more remote devices (e.g., auto alarm the house, control thermostat, CO-Alarm, smoke detector, etc.).

Still further, in other aspects, an implementation could be based on a context of a social gathering at a predetermined location. For example, in an implementation involving a social event having a series of predetermined timed events where each event has multiple remote devices engaged to be activated to perform a function (e.g., streamers release, music, lights, microphone, etc.), each remote device is configured to be active only during pre-set periods and each device is also configured to recognize and receive specific commands from gestures or movements from the wearable device. In such a situation, a user can control certain of the remote device independent from another and other dependent with one another, without manually resetting or engaging others at additional costs to operate the event. In such an operation, the communication between the wearable and the smart media may be using one communication methods while the communication between the smart media and the remote devices may be multiple other communication methods, though such is not required under the present invention.

It will be appreciated that the present invention provides a number of advantages and benefits over existing limitations including providing for the capability to have one control unit to control multiple devices where the control unit is always accessible; providing for multiple approaches by establishing auto context for the control function and device to be controlled; providing for, by pre-defined set of rules and the devices and with help of smart phones, easy configuration and communication of disparate devices; providing for use of motion co-processors, body suit sensors and other movement capabilities that recognize complex movements of the wearer's body and translate them to a digital model with outstanding precision and speed. It will be appreciated that the present invention is not so limited and has many implementations and uses not expressly stated herein.

Embodiments described herein can take the form of an entirely hardware implementation, an entirely software implementation, or an implementation containing both hardware and software elements. Embodiments may be implemented in software, which includes, but is not limited to, application software, firmware, resident software, microcode, etc.

Embodiments may also take the form where the entirety of the wearable device, the smart media and one or more remote devices are co-located or integrated into the same or proximate device. For instance, in a wearable glasses device, it is possible to have the smart media and wearable be a single unit. In that single unit there may also be one or more further remote devices (as defined hereinunder) within the integrated unit where one may act to communicate with other non-integrated remote devices and another may act to measure eye blinking, and yet another may act to measure body temperature of the glass wearer (i.e., the user). In such an example, the entirety of the present invention is integrated into one device. The present device is not so limited however.

The steps described herein may be implemented using any suitable controller or processor, and software application, which may be stored on any suitable storage location or computer-readable medium. The software application provides instructions that enable the processor to cause the receiver to perform the functions described herein.

Furthermore, embodiments may take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

The medium may be an electronic, magnetic, optical, electromagnetic, infrared, semiconductor system (or apparatus or device), or a propagation medium. Examples of a computer-readable medium include a semiconductor or solid state memory, magnetic tape, a removable computer diskette, a random access memory (RAM), a read-only memory (ROM), a rigid magnetic disk, and an optical disk. Current examples of optical disks include DVD, compact disk-read-only memory (CD-ROM), and compact disk - read/write (CD-R/W).

Although the present invention has been described in accordance with the embodiments shown, one of ordinary skill in the art will readily recognize that there could be variations to the embodiments and those variations would be within the spirit and scope of the present invention. Accordingly, many modifications may be made by one of ordinary skill in the art without departing from the spirit and scope of the present invention.

## Claims

1. A method comprising:
utilizing smart media to establish a context for a wearable device; and
utilizing the context established wearable device to control one or more remote devices.

2. The method of claim 1, wherein the smart media comprises any of a smart phone, tablet, personal computer, portable device, and wearable glasses.

3. The method of claim 1, wherein the smart media communicates with the wearable device and defines one or more control parameters to configure the wearable device.

4. The method of claim 1, wherein the smart media communicates with the one or more remote devices to be controlled.

5. The method of claim 4, wherein the smart media further defines one or more control parameters to configure the one or more remote devices.

6. The method of claim 4, wherein a control function of the wearable device is configured by the smart media.

7. The method of claim 4, wherein a control function integrated within the wearable device triggers at least one of the one or more remote devices.

8. The method of claim 7, wherein the control function comprises any of a touch, button, tap, signature, audio, text, command operation, image, bio signal, heart rate monitor, and movement.

9. The method of claim 1, wherein the context established wearable device comprises any of a watch, chest-strap, shoe pod, head-band, arm-band, hat, wrist-band, and glasses.

10. The method of claim 1, wherein the context established wearable device comprises a display.

11. The method of claim 1, wherein a message from the context established wearable device is a context for controlling activity.

12. The method of claim 1, wherein the one or more remote devices comprises any of a television, car, garage door, audio, video, toy, home alarm, light, and door.

13. The method of claim 1, wherein the context comprises any of preset, manual, automated, user predetermined, and user-defined event.

14. The method of claim 1, wherein the smart media comprises any of a computer-based device and further integrates the wearable device and one or more remote devices therewith.

15. The method of claim 1, wherein the control of the one or more remote devices is performed in response to receiving one or more gestures or movements associated with the wearable device in relation to each of the one or more remote devices.

16. The method of claim 15, wherein the one or more gestures comprises at least one user-defined gesture.

17. A non-transitory computer-readable medium having stored thereon data representing sequences of instructions that, when executed by a processor, cause the processor to perform operations comprising:
establishing a context for a wearable device using smart media; and
utilizing the context established wearable device to provide control of one or more remote devices.

18. The medium of claim 17, wherein the smart media comprises any of a smart phone, tablet, personal computer, portable device, and wearable glasses and defines one or more control parameters to configure the wearable device; wherein the smart media provides for communications over one or more communication methods with the one or more remote devices to be controlled; and wherein the smart media further defines one or more control parameters to configure the one or more remote devices.

19. The medium of claim 17, wherein the context is of the one or more remote devices being control in relation to control function, context based control of the one or more remote devices, a user selecting the one or more remote devices to be controlled, establishing a direct connection between the wearable device and the one or more remote devices, a home alarm system, a user sleeping, a toy having an actuator, a light, proximity, and time of day.

20. A system comprising:
smart media for communicating with and establishing a context for a wearable device, the wearable device for associating one or more commands to control one or more remote devices, and the one or more remote devices for responding to the one more commands from the wearable device in relation to each of the one or more remote devices.

21. The system of claim 20, wherein a control function is integrated within the wearable device for actuating at least one of the one or more remote devices in response to one or more gestures of the wearable device.

22. The system of claim 21, wherein the one or more gestures comprise any of a touch, button, tap, signature, audio, command operation, image, bio signal, heart rate monitor, and movement.

23. The system of claim 22, wherein a gesture detector associated with the wearable device comprises a touch sensor to detect contact of a user with the touch sensor.

24. The system of claim 20, wherein, the wearable device and the at least one of or more remote devices are an integrated device.
